# FASCICULE DE BREVET EUROPEEN

(11) **EP 2 981 632 B1**
(45) Date de publication et mention de la délivrance du brevet: **02.08.2017**
(21) Numéro de dépôt: 14719035.9
(22) Date de dépôt: 01.04.2014
(51) Int. Cl.: C22C 21/16, C22F 1/057

(54) **TÔLES MINCES EN ALLIAGE D'ALUMINIUM-CUIVRE-LITHIUM POUR LA FABRICATION DE FUSELAGES D'AVION**
DÜNNE BLECHE AUS EINER ALUMINIUM-KUPFER-LITHIUM-LEGIERUNG ZUR HERSTELLUNG VON FLUGZEUGRÜMPFEN
THIN SHEETS MADE OF AN ALUMINIUM-COPPER-LITHIUM ALLOY FOR PRODUCING AIRPLANE FUSELAGES

(30) Priorité: 03.04.2013 FR 1300764
(43) Date de publication de la demande: 10.02.2016
(73) Titulaire: Constellium Issoire, 63500 Issoire (FR)
(72) Inventeur: BES Bernard, 38180 Seyssins (FR); CHEVY Juliette, 38430 Moirans (FR); EBERL FRANK, 63500 Issoire (FR)
(74) Mandataire: Constellium - Propriété Industrielle
(86) Numéro de dépôt international: PCT/FR2014/000070
(87) Numéro de publication internationale: WO 2014/162069

(56) Documents cités:
- EP-A1- 1 891 247
- CN-A- 101 967 588
- US-A1- 2010 314 007
- US-A2- 2011 209 801
- CHEN D L ET AL: "Near-threshold fatigue crack growth behavior of 2195 aluminum-lithium-alloyâ prediction of crack propagation direction and influence of stress ratio", METALLURGICAL AND MATERIALS TRANSACTIONS A, SPRINGER-VERLAG, NEW YORK, vol. 31, no. 6, 1 juin 2000 (2000-06-01), pages 1531-1541, XP019693326, ISSN: 1543-1940

## Description

### Domaine de l'invention

L'invention concerne les produits laminés alliages aluminium-cuivre-lithium, plus particulièrement, de tels produits, leurs procédés de fabrication et d'utilisation, destinés notamment à la construction aéronautique et aérospatiale.

### Etat de la technique

Des produits laminés en alliage d'aluminium sont développés pour produire des éléments de fuselage destinés notamment à l'industrie aéronautique et à l'industrie aérospatiale.

Les alliages aluminium - cuivre - lithium sont particulièrement prometteurs pour fabriquer ce type de produit.

Le brevet US 5,032,359 décrit une vaste famille d'alliages aluminium-cuivre-lithium dans lesquels l'addition de magnésium et d'argent, en particulier entre 0,3 et 0,5 pour cent en poids, permet d'augmenter la résistance mécanique.

Le brevet US 5,455,003 décrit un procédé de fabrication d'alliages Al-Cu-Li qui présentent une résistance mécanique et une ténacité améliorées à température cryogénique, en particulier grâce à un écrouissage et un revenu appropriés. Ce brevet recommande en particulier la composition, en pourcentage en poids, Cu = 3,0 - 4,5, Li = 0,7 - 1,1, Ag = 0 - 0,6, Mg = 0,3-0,6 et Zn = 0 - 0,75.

Le brevet US 7,438,772 décrit des alliages comprenant, en pourcentage en poids, Cu : 3-5, Mg : 0,5-2, Li : 0,01-0,9 et décourage l'utilisation de teneurs en lithium plus élevées en raison d'une dégradation du compromis entre ténacité et résistance mécanique.

Le brevet US 7,229,509 décrit un alliage comprenant (% en poids) : (2,5-5,5) Cu, (0,1-2,5) Li, (0,2-1,0) Mg, (0,2-0,8) Ag, (0,2-0,8) Mn, 0,4 max Zr ou d'autres agents affinant le grain tels que Cr, Ti, Hf, Sc, V.

La demande de brevet US 2009/142222 A1 décrit des alliages comprenant (en % en poids), 3,4 à 4,2% de Cu, 0,9 à 1,4 % de Li, 0,3 à 0,7 % de Ag, 0,1 à 0,6% de Mg, 0,2 à 0,8 % de Zn, 0,1 à 0,6 % de Mn et 0,01 à 0,6 % d'au moins un élément pour le contrôle de la structure granulaire. Cette demande décrit également un procédé de fabrication de produits filés.
La demande de brevet US 2011/0247730 décrit des alliages comprenant (en % en poids), 2.75 à 5.0% de Cu, 0,1 à 1,1 % de Li, 0,3 à 2.0 % de Ag, 0,2 à 0,8% de Mg, 0,50 à 1.5 % de Zn, jusque 1.0% de Mn, avec un rapport Cu/Mg compris entre 6,1 et 17, cet alliage étant peu sensible au corroyage.

La demande de brevet CN101967588 décrit des alliages de composition (en % en poids) Cu 2,8 - 4,0 ; Li 0,8 - 1,9 ; Mn 0,2-0,6 ; Zn 0,20 - 0,80, Zr 0,04 - 0,20, Mg 0,20 - 0,80, Ag 0,1 - 0,7, Si ≤ 0.10, Fe ≤ 0.10, Ti ≤ 0.12.

Les caractéristiques nécessaires pour les tôles d'aluminium destinées aux applications de fuselage sont notamment décrites par exemple dans le brevet EP 1 891 247. Il est souhaitable notamment que la tôle ait une limite d'élasticité élevée (pour résister au flambage) ainsi qu'une ténacité sous contrainte plane élevée, caractérisée notamment par une valeur élevée de facteur d'intensité de contrainte apparent à la rupture (Kapp) et une longue courbe R.

Le brevet EP 1 966 402 décrit un alliage comprenant 2,1 à 2,8 % en poids de Cu, 1,1 à 1,7 % en poids de Li, 01 à 0,8 % en poids de Ag, 0,2 à 0,6 % en poids de Mg, 0,2 à 0,6 % en poids de Mn, une quantité de Fe et de Si inférieure ou égale à 0,1 % en poids chacun, et des impuretés inévitables à une teneur inférieure ou égale à 0,05% en poids chacune et 0,15% en poids au total, l'alliage étant sensiblement exempt de zirconium, particulièrement adapté pour l'obtention de tôles minces recristallisées.

Pour certaines applications de fuselage, il est particulièrement important que la ténacité soit élevée dans la direction T-L. En effet, une grande partie du fuselage est dimensionnée pour résister à la pression interne de l'avion. La direction longitudinale des tôles étant en général positionnée dans la direction de la longueur de l'avion, celles-ci sont contrainte dans la direction transverse par la pression. Les fissures sont alors sollicitées dans la direction T-L.

L'obtention de ténacité élevée, notamment dans la direction T-L est particulièrement délicate sur les tôles minces telles que les tôles dont l'épaisseur est comprise entre 0,5 et 3,3 mm.

Il est connu du brevet EP 1 891 247 que pour les tôles dont l'épaisseur est comprise entre 4 et 12 mm, il peut être avantageux que la microstructure soit complètement non-recristallisée. Cependant l'effet de la structure granulaire sur les propriétés peut être différent à différentes épaisseurs. Par ailleurs l'obtention d'une structure essentiellement non-recristallisée pour les tôles minces dont l'épaisseur est comprise entre 0,5 mm et 3,3 mm est difficile car l'énergie emmagasinée lors de la déformation à froid conduit le plus souvent à la recristallisation lors de la mise en solution. Ainsi les tôles dont l'épaisseur est comprise entre 0,5 mm et 3,3 mm du brevet EP 1 891 247 ont une structure 100% recristallisée (voir également le brevet FR 2 889 542 Tableau 6). La demande US 2012/0055590 mentionne l'obtention d'une structure non-recristallisée pour des tôles minces d'épaisseur 2 mm. Cependant le procédé proposé dans cette demande pour obtenir une structure non-recristallisée nécessite une déformation à froid importante, d'au moins 25%, après mise en solution et trempe de la tôle. Ce type de déformation à froid peut être délicat à réaliser car après mise en solution et trempe les tôles atteignent en quelques heures une dureté élevée. Par ailleurs, une déformation à froid importante après mise en solution et trempe affecte la structure granulaire, ainsi les produits obtenus par le procédé décrit par la demande US 2012/0055590 présentent de nombreuses bandes de cisaillement traversant plusieurs grains, comme illustré par les Figures 11b à 11e ce qui peut notamment avoir des effets néfastes sur la formabilité et la ténacité dans certaines directions de sollicitation ou sur la localisation de la corrosion.

Le brevet EP 1 170 394 mentionne également l'obtention de structures non-recristallisées mais pour des tôles d'épaisseur supérieure à 3,5 mm.

Il existe un besoin pour des tôles minces, d'épaisseur 0,5 à 3,3 mm, en alliage aluminium-cuivre-lithium présentant des propriétés améliorées par rapport à celles des produits connus, en particulier en termes de ténacité dans la direction T-L, de propriétés de résistance mécanique statique et de résistance à la corrosion, tout en ayant une faible densité. Par ailleurs il existe un besoin pour un procédé simple et économique d'obtention de ces tôles minces.

### Objet de l'invention

Un objet de l'invention est un procédé de fabrication d'une tôle mince d'épaisseur 0,5 à 3,3 mm de structure essentiellement non-recristallisée en alliage à base d'aluminium dans lequel, successivement
a) on élabore un bain de métal liquide comprenant
   2,6 à 3,4 % en poids de Cu,
   0,5 à 1,1 % en poids de Li,
   0,1 à 0,4 % en poids de Ag,
   0,2 à 0,8 % en poids de Mg,
   0,11 à 0,20 % en poids de Zr,
   0,01 à 0,15 % en poids de Ti,
   optionnellement au moins un élément choisi parmi Mn, V, Cr, Sc, et Hf, la quantité de l'élément, s'il est choisi, étant de 0,01 à 0,8 % en poids pour Mn, 0,05 à 0,2 % en poids pour V, 0,05 à 0,3 % en poids pour Cr, 0,02 à 0,3 % en poids pour Sc, 0,05 à 0,5 % en poids pour Hf,
   une quantité de Zn inférieure à 0,6 % en poids, une quantité de Fe et de Si inférieure ou égale à 0,1 % en poids chacun, et des impuretés inévitables à une teneur inférieure ou égale à 0,05% en poids chacune et 0,15% en poids au total,
b) on coule une plaque à partir dudit bain de métal liquide
c) on homogénéise ladite plaque à une température comprise entre 450°C et 515 °C ;
d) on lamine ladite plaque par laminage à chaud en une tôle ayant une épaisseur comprise entre 4 et 12 mm ;
e) on lamine ladite tôle par laminage à froid en une tôle mince ayant une épaisseur finale comprise entre 0,5 et 3,3 mm, la réduction d'épaisseur réalisée par laminage à froid étant comprise entre 1 et 3,5 mm ;
f) on réalise un traitement thermique pendant lequel la tôle atteint pendant au moins trente minutes une température comprise entre 300 °C et 450 °C ;
g) on met en solution à une température comprise entre 450 °C et 515 °C et on trempe ladite tôle mince;
h) on tractionne de façon contrôlée ladite tôle avec une déformation permanente de 0,5 à 5 %, la déformation à froid après mise en solution étant inférieure à 15% ;
i) on effectue un revenu comprenant un chauffage à une température comprise entre 130 et 170°C et de préférence entre 150 et 160°C pendant 5 à 100 heures et de préférence de 10 à 40h.

Un autre objet de l'invention est une tôle mince de structure granulaire essentiellement non-recristallisée obtenue par le procédé selon l'invention dont la limite d'élasticité R_{p0,2} dans la direction TL est au moins de 395 MPa, dont la ténacité en contrainte plane Kₐₚₚ, mesurée sur des éprouvettes de type CCT760 (2ao = 253 mm), d'au moins 150 MPa√m.

Encore un autre objet de l'invention est l'utilisation d'une tôle mince selon l'invention dans un panneau de fuselage pour aéronef.

### Description des figures

Figure 1 : Coupe métallographique de la tôle A.
Figure 2 : Coupe métallographique de la tôle B.
Figure 3 : Coupe métallographique de la tôle C.
Figure 4 : Coupe métallographique de la tôle D.
Figure 5 : Coupe métallographique de la tôle E.
Figure 6 : Coupe métallographique de la tôle F.
Figure 7 : Coupe métallographique de la tôle G.
Figure 8 : Courbes R obtenues dans la direction T-L sur les tôles A à G pour des éprouvettes de largeur 760 mm.
Figure 9 : Relation entre la limite d'élasticité dans le sens TL et le facteur d'intensité de contrainte Kapp T-L mesuré sur des échantillons de largeur 760 mm pour les tôles A à G.

### Description de l'invention

Sauf mention contraire, toutes les indications concernant la composition chimique des alliages sont exprimées comme un pourcentage en poids basé sur le poids total de l'alliage. L'expression 1,4 Cu signifie que la teneur en cuivre exprimée en % en poids est multipliée par 1,4. La désignation des alliages se fait en conformité avec les règlements de The Aluminium Association, connus de l'homme du métier. La densité dépend de la composition et est déterminée par calcul plutôt que par une méthode de mesure de poids. Les valeurs sont calculées en conformité avec la procédure de The Aluminium Association, qui est décrite pages 2-12 et 2-13 de « Aluminum Standards and Data ». Sauf mention contraire les définitions des états métallurgiques indiquées dans la norme européenne EN 515 s'appliquent.
Les caractéristiques mécaniques statiques en traction, en d'autres termes la résistance à la rupture Rₘ, la limite d'élasticité conventionnelle à 0,2% d'allongement R_{p0,2}, et l'allongement à la rupture A%, sont déterminés par un essai de traction selon la norme NF EN ISO 6892-1, le prélèvement et le sens de l'essai étant définis par la norme EN 485-1. Dans le cadre de l'invention, les caractéristiques mécaniques sont mesurées en pleine épaisseur.

Une courbe donnant le facteur d'intensité de contrainte effectif en fonction de l'extension de fissure effective, connue comme la courbe R, est déterminée selon la norme ASTM E 561. Le facteur d'intensité de contrainte critique K_{C}, en d'autres termes le facteur d'intensité qui rend la fissure instable, est calculé à partir de la courbe R. Le facteur d'intensité de contrainte K_{CO} est également calculé en attribuant la longueur de fissure initiale au commencement de la charge monotone, à la charge critique. Ces deux valeurs sont calculées pour une éprouvette de la forme requise. Kₐₚₚ représente le facteur K_{CO} correspondant à l'éprouvette qui a été utilisée pour effectuer l'essai de courbe R. K_{eff} représente le facteur K_{C} correspondant à l'éprouvette qui a été utilisée pour effectuer l'essai de courbe R. Δa_{eff}(max) représente l'extension de fissure du dernier point de la courbe R, valide selon la norme ASTM E561. Le dernier point est obtenu soit au moment de la rupture brutale de l'éprouvette, soit éventuellement au moment où la contrainte sur le ligament non fissuré excède en moyenne la limite d'élasticité du matériau. Sauf mention contraire, la taille de fissure à la fin du stade de pré-fissurage par fatigue est W/3 pour des éprouvettes du type M(T), dans laquelle W est la largeur de l'éprouvette telle que définie dans la norme ASTM E561.

Sauf mention contraire, les définitions de la norme EN 12258 s'appliquent.
Dans le cadre de la présente invention, on appelle structure granulaire essentiellement non--recristallisée une structure granulaire telle que le taux de recristallisation à ½ épaisseur est inférieur à 30% et de préférence inférieur à 10% et on appelle structure granulaire essentiellement recristallisée une structure granulaire telle que le taux de recristallisation à ½ épaisseur est supérieur à 70% et de préférence supérieur à 90%. Le taux de recristallisation est défini comme la fraction de surface sur une coupe métallographique occupée par des grains recristallisés.

Les présents inventeurs ont obtenus des tôles minces essentiellement non-recristallisées en alliage selon l'invention d'épaisseur 0,5 à 3,3 mm en utilisant le procédé selon l'invention qui comprend notamment la combinaison de
- une homogénéisation à une température comprise entre 450°C et 515 °C,
- une déformation par laminage à froid avec une réduction d'épaisseur comprise entre 1 et 3,5 mm,
- un traitement thermique après laminage à froid et avant mise en solution pendant lequel la tôle mince atteint pendant au moins trente minutes une température comprise entre 300 °C et 450 °C.

Les tôles minces ainsi obtenues ont des propriétés particulièrement avantageuses, notamment en ce qui concerne la ténacité dans la direction T-L.

Avantageusement, la texture à mi-épaisseur des les tôles essentiellement non-recristallisées selon l'invention est telle que la composante P, la composante Q et la somme des trois composantes Cube, Goss et CG26,5, exprimées en fraction volumique sont inférieures à celles d'une texture cristallographique aléatoire.

Dans le procédé selon l'invention, on élabore un bain de métal liquide dont la composition est la suivante.
La teneur en cuivre des produits selon l'invention est comprise entre 2,6 et 3,4 % en poids. Dans une réalisation avantageuse de l'invention, la teneur en cuivre est comprise entre 2,8 et 3,1 % en poids. Dans un mode de réalisation avantageux de l'invention la teneur en cuivre est au plus de 3,0 % en poids et préférentiellement au plus 2,96% en poids. Dans un mode de réalisation de l'invention la teneur en cuivre est au plus de 2,9 % en poids. Lorsque la teneur en cuivre est trop élevée, une valeur très élevée de ténacité dans la direction T-L peut ne pas être atteinte. Lorsque la teneur en cuivre est trop faible, les caractéristiques mécaniques statiques minimales ne sont pas atteintes.
La teneur en lithium des produits selon l'invention est comprise entre 0,5 et 1.1 % en poids. Avantageusement, la teneur en lithium est comprise entre 0,55 % et 0,75 % en poids. De manière préférée, la teneur en lithium est comprise entre 0,60 % et 0,73 % en poids. L'addition de lithium peut contribuer à l'augmentation de la résistance mécanique et de la ténacité, une teneur trop élevée ou trop faible ne permet pas d'obtenir une valeur très élevée de ténacité dans la direction T-L et/ou une limite d'élasticité suffisante.
La teneur en magnésium des produits selon l'invention est comprise entre 0,2 et 0,8 % en poids et de manière préférée entre 0,40 et 0,70 % en poids. Dans un mode de réalisation avantageux de l'invention la teneur en magnésium est comprise entre 0,50 et 0,65 % en poids.
La teneur en zirconium est comprise entre 0,11 et 0,20 % en poids et de préférence entre 0,12 et 0,18% en poids. La teneur en zirconium est préférentiellement comprise entre 0,14 et 0,17 % en poids. L'addition de zirconium dans ces proportions contribue notamment à l'obtention d'une structure essentiellement non-recristallisée.

La teneur en argent est comprise entre 0,1 et 0,4 % en poids. Dans une réalisation avantageuse de l'invention, la teneur en argent est comprise entre 0,2 et 0,3 % en poids. Dans un mode de réalisation de l'invention la teneur en argent est comprise entre 0,15 et 0,28 % en poids.
La teneur en titane est comprise entre 0,01 et 0,15 % en poids. L'addition de titane contribue à contrôler la structure granulaire, notamment lors de la coulée.

L'alliage peut optionnellement contenir au moins un élément choisi parmi Mn, V, Cr, Sc, et Hf, la quantité de l'élément, s'il est choisi, étant de 0,01 à 0,8 % en poids pour Mn, 0,05 à 0,2 % en poids pour V, 0,05 à 0,3 % en poids pour Cr, 0,02 à 0,3 % en poids pour Sc, 0,05 à 0,5 % en poids pour Hf. Ces éléments peuvent contribuer à contrôler la structure granulaire. Dans un mode de réalisation de l'invention, on n'ajoute pas de Mn, V, Cr ou Sc et leur teneur est inférieure ou égale à 0,05% en poids.

De préférence, les teneurs en fer et en silicium sont chacune au plus de 0,1 % en poids. Dans une réalisation avantageuse de l'invention les teneurs en fer et en silicium sont au plus de 0,08 % et préférentiellement au plus de 0,04 % en poids. Une teneur en fer et en silicium contrôlée et limitée contribue à l'amélioration du compromis entre résistance mécanique et tolérance aux dommages.

La teneur en zinc est inférieure à 0,6 % en poids. Préférentiellement la teneur en zinc est inférieure à 0,2 % en poids et de préférence inférieure à 0,1 % en poids. La teneur en zinc est avantageusement inférieure à 0,04 % en poids.

Les impuretés inévitables sont maintenues à une teneur inférieure ou égale à 0,05% en poids chacune et 0,15% en poids au total.
Le procédé de fabrication des tôles minces selon l'invention comprend ensuite des étapes de coulée, laminage à chaud et à froid, traitement thermique intermédiaire, mise en solution, traction contrôlée, trempe et revenu.
Le bain de métal liquide élaboré est coulé sous une forme de plaque de laminage.

La plaque de laminage est ensuite homogénéisée à une température comprise entre 450°C et 515°C. De préférence, la durée d'homogénéisation est comprise entre 5 et 60 heures. Avantageusement, la température d'homogénéisation est au moins 480 °C. Les présents inventeurs ont constaté qu'une température d'homogénéisation supérieure à 515 °C ne permet pas dans certains cas d'atteindre la structure granulaire essentiellement non-recristallisée désirée.

Après homogénéisation, la plaque de laminage est en général refroidie jusqu'à température ambiante avant d'être préchauffée en vue d'être déformée à chaud. Le préchauffage a pour objectif d'atteindre une température de préférence comprise entre 400 et 500 °C permettant la déformation par laminage à chaud.
Le laminage à chaud est effectué de manière à obtenir une tôle d'épaisseur 4 à 12 mm. La température lors du laminage à chaud est de préférence d'au moins 300 °C.
Après laminage à chaud, on lamine à froid la tôle obtenue en une tôle mince ayant une épaisseur finale comprise entre 0,5 et 3,3 mm. Préférentiellement, l'épaisseur finale est au plus de 3,0 mm et de manière préférée au plus de 2,8 mm. Avantageusement l'épaisseur finale est au moins de 0,8 mm et de manière préférée au moins de 1,2 mm. Le contrôle de la réduction d'épaisseur réalisée par laminage à froid est important pour obtenir la structure granulaire essentiellement non-recristallisée désirée. En effet, les présents inventeurs ont constaté qu'une réduction d'épaisseur par laminage à froid trop élevée ne permet pas d'obtenir la structure granulaire essentiellement non-recristallisée désirée. La réduction d'épaisseur réalisée par laminage à froid est selon l'invention comprise entre 1 et 3,5 mm. Dans un mode de réalisation avantageux, la réduction d'épaisseur réalisée par laminage à froid est au plus de 3,0 mm. De manière surprenante, le contrôle de la réduction d'épaisseur réalisée par laminage à froid mesurée en mm est plus important que le contrôle du pourcentage de réduction lors du laminage à froid.
On réalise après laminage à froid un traitement thermique pendant lequel la tôle mince atteint pendant au moins trente minutes, de préférence au moins une heure et de manière préférée pendant au moins deux heures une température comprise entre 300 °C et 450 °C. Ce traitement contribue également à l'obtention de la structure granulaire essentiellement non-recristallisée désirée.

Ce traitement peut être un traitement thermique séparé ou peut être réalisé lors de la montée en température du traitement de mise en solution, sous forme d'un palier de température et/ou d'une vitesse de montée adaptée. Cependant ce traitement n'est pas obtenu lors de la montée en température du traitement de mise en solution connu de l'art antérieur car la vitesse de montée des tôles d'épaisseur inférieure ou égale à 3,3 mm est d'au moins 30 °C/min et typiquement de l'ordre d'au moins 50 °C/min entre 300 et 450 °C et la durée passée à une température comprise entre 300 °C et 450 °C est donc inférieure à 5 minutes et typiquement de l'ordre de 3 minutes.
La tôle mince ainsi obtenue est ensuite mise en solution entre 450 et 515 °C. La durée de mise en solution est avantageusement comprise entre 5 min à 8 h. La tôle mince ainsi mise en solution est ensuite trempée.
Il est connu de l'homme du métier que les conditions précises de mise en solution doivent être choisies en fonction de l'épaisseur et de la composition de façon à mettre en solution solide les éléments durcissants.
La tôle mince subit ensuite une déformation à froid par traction contrôlée avec une déformation permanente de 0,5 à 5 % et préférentiellement de 1 à 3%. Des étapes connues telles que le laminage, le planage, le redressage la mise en forme peuvent être optionnellement réalisées après mise en solution et trempe et avant ou après la traction contrôlée, cependant la déformation à froid totale après mise en solution et trempe doit rester inférieure à 15% et de préférence inférieure à 10%. Des déformations à froid élevées après mise en solution et trempe causent en effet l'apparition de nombreuses bandes de cisaillement traversant plusieurs grains, ces bandes de cisaillement n'étant pas souhaitables. De préférence on ne réalise pas de laminage à froid après la mise en solution.
Un revenu est réalisé comprenant un chauffage à une température comprise entre 130 et 170°C et de préférence entre 150 et 160°C pendant 5 à 100 heures et de préférence de 10 à 40h. De manière préférée, l'état métallurgique final est un état T8.
Dan un mode de réalisation de l'invention, un traitement thermique court est réalisé après traction contrôlée et avant revenu de façon à améliorer la formabilité des tôles. Les tôles peuvent ainsi être mises en forme par un procédé tel que l'étirage-formage avant d'être revenues.

Les tôles minces de structure essentiellement non-recristallisée obtenues par le procédé selon l'invention ont une ténacité dans la direction T-L particulièrement avantageuse. En particulier, les tôles minces obtenues par le procédé selon l'invention présentent une limite d'élasticité Rp0,2 dans la direction TL est au moins de 395 MPa, et une ténacité en contrainte plane Kapp, mesurée sur des éprouvettes de type CCT760 (2ao = 253 mm) dans la direction T-L, d'au moins 150 MPa√m.
Pour les tôles minces selon l'invention dont la teneur en lithium est comprise entre 0,55 et 0,75 % en poids l'allongement dans la direction TL est au moins 14%. De plus pour les tôles dont la teneur en lithium est comprise entre 0,55 et 0,75 % la limite d'élasticité R_{p0,2} dans la direction TL est avantageusement d'au moins de 405 MPa, et la ténacité en contrainte plane Kₐₚₚ, mesurée sur des éprouvettes de type CCT760 (2ao = 253 mm) dans la direction T-L est avantageusement d'au moins 160 MPa√m, notamment pour une teneur en magnésium comprise entre 0,40 et 0,65 % en poids. Par ailleurs pour les tôles dont la teneur en lithium est comprise entre 0,55 et 0,75 % l'allongement dans la direction TL est avantageusement d'au moins 15% notamment pour une teneur en cuivre comprise entre 2,8 et 3,0 % en poids.
Les performances les plus favorables des tôles selon l'invention, à savoir une limite d'élasticité R_{p0,2} dans la direction TL d'au moins de 410 MPa, une ténacité en contrainte plane Kₐₚₚ, mesurée sur des éprouvettes de type CCT760 (2ao = 253 mm), dans la direction T-L d'au moins 163 MPa √m et de préférence d'au moins 165 MPa √m et un allongement dans la direction TL d'au moins 16% sont notamment obtenues lorsque la teneur en lithium est comprise entre 0,55 et 0,75 % en poids, la teneur en cuivre est comprise entre 2,8 et 3,0 % en poids et la teneur en magnésium est comprise entre 0,40 et 0,65 % en poids. De préférence la teneur en magnésium est comprise entre 0,50 et 0,65 % en poids dans ce mode de réalisation.

Avantageusement les tôles minces selon l'invention ont un allongement à 45° par rapport à la direction de laminage d'au moins 18% et de préférence d'au moins 20 ou 21%.
Les présents inventeurs ont constaté que les tôles selon l'invention ne présentent pas de bandes de cisaillement traversant plusieurs grains.

La résistance à la corrosion intergranulaire des tôles selon l'invention est élevée. Dans un mode de réalisation préféré de l'invention, la tôle de l'invention peut être utilisée sans placage
L'utilisation de tôles minces selon l'invention dans un panneau de fuselage pour aéronef est avantageuse. Les tôles minces selon l'invention sont également avantageuses dans les applications aérospatiales telles que la fabrication de fusées.

### Exemple

Dans cet exemple, 7 tôles minces ont été préparées.

Des alliages dont la composition est donnée dans le Tableau 1 ont été coulés :

**Tableau 1- Composition (%en poids)**

| | Cu | Li | Mg | Zr | Ag | Fe | Si |
|---|---|---|---|---|---|---|---|
| **A** | 3,2 | 0,73 | 0,68 | 0,14 | 0,26 | 0,03 | 0,04 |
| **B** | 3,0 | 0,70 | 0,64 | 0,17 | 0,27 | 0,02 | 0,03 |
| **C** | 3,0 | 0,73 | 0,35 | 0,15 | 0,27 | 0,02 | 0,03 |
| **D** | 2,7 | 0,75 | 0,58 | 0,14 | 0,28 | 0,03 | 0,02 |
| **E** | 2,9 | 0,73 | 0,45 | 0,14 | 0,29 | 0,04 | 0,02 |
| **F** | 3,2 | 1,01 | 0,32 | 0,14 | 0,32 | 0,05 | 0,03 |
| **G** | 3,4 | 1,01 | 0,33 | 0,11 | 0,22 | 0,04 | 0,03 |

| | | | | | | | |
|---|---|---|---|---|---|---|---|
| Teneur en titane visée : 0.03% en poids | | | | | | | |

Les plaques ont été transformées selon les paramètres indiqués dans le tableau 2. Les conditions de transformation utilisées pour les tôles en alliage A, B, C et F sont conformes à l'invention. Les conditions de transformation utilisées pour les tôles en alliage D, E et G sont des conditions de référence : pour les tôles D et E la réduction d'épaisseur par laminage à froid n'est pas conforme à l'invention, pour la tôle G, les conditions d'homogénéisation et de traitement thermique après laminage à froid ne sont pas conformes à l'invention. Les conditions de revenu ont été définies de façon à obtenir un état T8. La vitesse de montée en température lors de la mise en solution était de l'ordre de 50 °C par minute.

**Tableau 2. Paramètres de transformation des tôles**

| Procédé | **A** | **B** | **C** | **D** | **E** | **F** | **G** |
|---|---|---|---|---|---|---|---|
| Homogénéisation | 12h 505°C | 12h 505°C | 12h 505°C | 12h 505°C | 12h 505°C | 12h 505°C | 12h 505°C + 48h 519°C |
| Epaisseur de sortie de laminage à chaud (mm) | 4,37 | 4,39 | 4,38 | 6,28 | 6,28 | 3,2 | 4,5 |
| Epaisseur finale (mm) | 1,52 | 1,52 | 1,52 | 2,53 | 2,53 | 1,6 | 1,6 |
| Réduction d'épaisseur par laminage à froid (mm) | 2,85 | 2,87 | 2,86 | 3,75 | 3,75 | 1,6 | 2,9 |
| Traitement thermique après laminage à froid | 60 mn 425°C | 60 mn 425°C | 60 mn 425°C | 60 mn 425°C | 60 mn 425°C | 12h 380°C + 3h 425°C | - |
| Mise en solution | 10 mn 505°C | 10 mn 505°C | 10 mn 505°C | 20 mn 505°C | 20 mn 505°C | 10mn 505°C | 10 mn 505°C |
| Traction | 2% | 2% | 2% | 2% | 2% | 2% | 2% |
| Revenu | 36h155 °C | 36h155 °C | 24h155 °C | 40h155 °C | 36h155 °C | 14h 155°C | 14h 155°C |

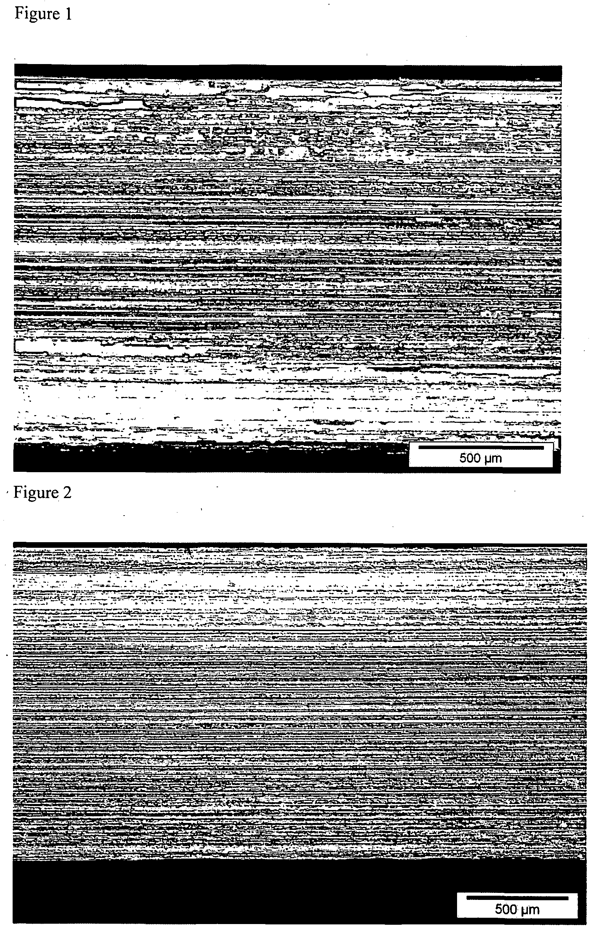

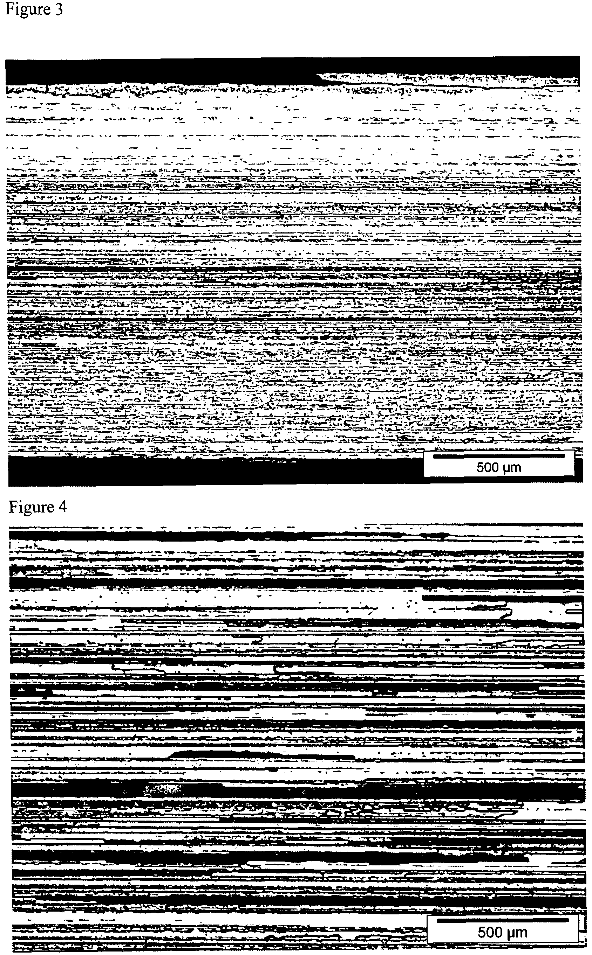

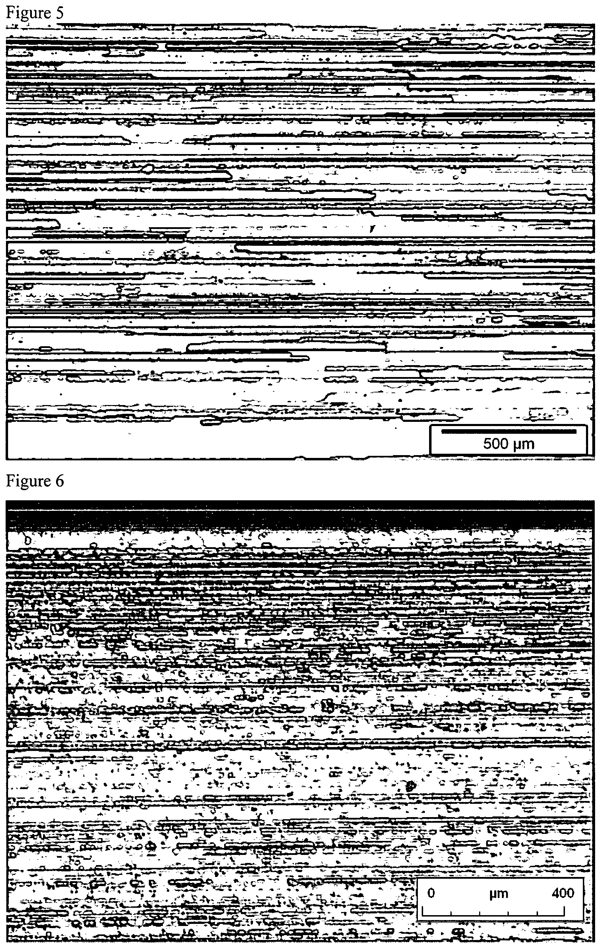

La structure granulaire des échantillons a été caractérisée à partir de l'observation microscopique des sections transversales après oxydation anodique, sous lumière polarisée. Les microstructures observées pour les échantillons A à G sont présentées sur les Figures 1 à 7, respectivement. On n'observe pas de bandes de cisaillement traversant plusieurs grains sur ces microstructures. La structure granulaire des tôles A, B, C et F était essentiellement non-recristallisée. La structure granulaire des tôles D, E et G était essentiellement recristallisée. Les caractérisations de texture ont été effectuées à mi-épaisseur sur les tôles A à E. Pour les tôles A, B et C la composante P, la composante Q et la somme des trois composantes Cube, Goss et CG26,5, exprimées en fraction volumique sont inférieures à celles d'une texture cristallographique aléatoire alors que ce n'est pas le cas pour les tôles DetE.

Les échantillons ont été testés mécaniquement afin de déterminer leurs propriétés mécaniques statiques ainsi que leur résistance à la propagation des fissures. La limite d'élasticité en traction, la résistance ultime et l'allongement à la rupture sont fournis dans le tableau 3.

**Tableau 3- Caractéristiques mécaniques exprimées en MPa (R_{p0,2}, Rₘ) ou en pourcentage (A%)**

| Référence | R_{p0,2} (L) | Rₘ(L) | A%(L) | R_{p0,2} (TL) | Rₘ(TL) | A%(TL) | R_{p0,2} (45°) | Rₘ(45°) | A%(45°) |
|---|---|---|---|---|---|---|---|---|---|
| A | 475 | 522 | 11,7 | 441 | 489 | 14,0 | 380 | 420,0 | 19,6 |
| B | 431 | 486 | 12,9 | 414 | 460 | 17,1 | 358 | 387 | 23,4 |
| C | 423 | 472 | 12,2 | 399 | 451 | 15,9 | 344 | 381 | 19,6 |
| D | 403 | 437 | 11,6 | 371 | 428 | 13,9 | 354 | 403 | 15,7 |
| E | 433 | 464 | 11,4 | 395 | 458 | 11,4 | 394 | 444 | 12,3 |
| F | 466 | 508 | 8.4 | 446 | 490 | 10.7 | | | |
| G | 462 | 501 | 11.3 | 422 | 476 | 15.2 | 428 | 486 | 11.7 |

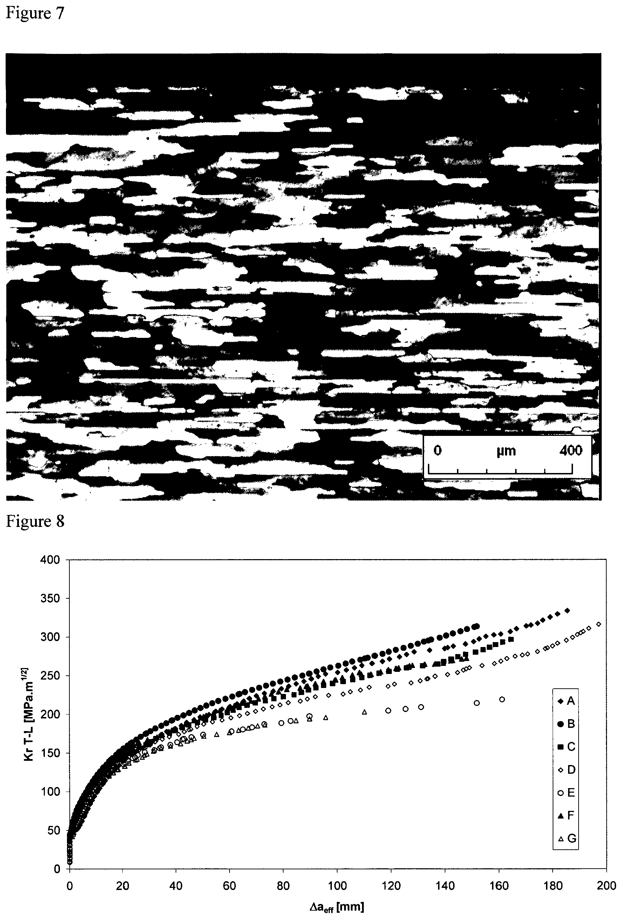

Les courbes R caractérisées pour une largeur d'éprouvette de 760 mm dans la direction T-L sont fournies sur la Figure 8.

.Le tableau 4 résume les résultats des essais de ténacité pour ces échantillons.

**Tableau 4 résultats des courbes R pour les éprouvettes de largeur 760 mm.**

| **Tôle** | **Kapp [MPa√m]** | | **Δa_{eff} max [mm]** | |
|---|---|---|---|---|
| | **T-L** | **L-T** | **T-L** | **L-T** |
| A | 160 | 114 | 185 | 103 |
| B | 167 | 124 | 152 | 144 |
| C | 154 | 127 | 165 | 110 |
| D | 147 | 151 | 222 | 210 |
| E | 137 | 164 | 161 | 214 |
| F | 157 | 107 | 148 | 114 |
| G | 135 | 145 | 110 | 90 |

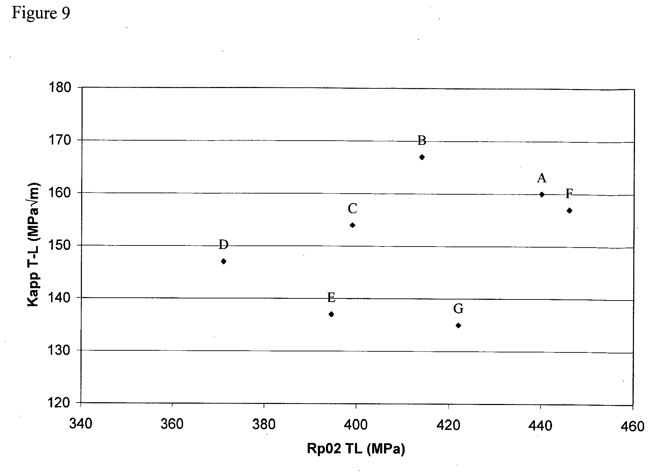

La Figure 9 montre la relation entre Kₐₚₚ T-L et Rp0,2 LT. On distingue clairement l'avantage des tôles A, B, C et F selon l'invention.

## Revendications

1. Procédé de fabrication d'une tôle mince d'épaisseur 0,5 à 3,3 mm de structure essentiellement non-recristallisée en alliage à base d'aluminium dans lequel, successivement
a) on élabore un bain de métal liquide comprenant
2,6 à 3,4 % en poids de Cu,
0,5 à 1,1 % en poids de Li,
0,1 à 0,4 % en poids de Ag,
0,2 à 0,8 % en poids de Mg,
0,11 à 0,20 % en poids de Zr,
0,01 à 0,15 % en poids de Ti,
optionnellement au moins un élément choisi parmi Mn, V, Cr, Sc, et Hf, la quantité de l'élément, s'il est choisi, étant de 0,01 à 0,8 % en poids pour Mn, 0,05 à 0,2 % en poids pour V, 0,05 à 0,3 % en poids pour Cr, 0,02 à 0,3 % en poids pour Sc, 0,05 à 0,5 % en poids pour Hf,
une quantité de Zn inférieure à 0,6 % en poids, une quantité de Fe et de Si inférieure ou égale à 0,1 % en poids chacun, le reste étant de l'aluminium et des impuretés inévitables à une teneur inférieure ou égale à 0,05% en poids chacune et 0,15% en poids au total,
b) on coule une plaque à partir dudit bain de métal liquide
c) on homogénéise ladite plaque à une température comprise entre 450°C et 515 °C ;
d) on lamine ladite plaque par laminage à chaud en une tôle ayant une épaisseur comprise entre 4 et 12 mm ;
e) on lamine ladite tôle par laminage à froid en une tôle mince ayant une épaisseur finale comprise entre 0,5 et 3,3 mm, la réduction d'épaisseur réalisée par laminage à froid étant comprise entre 1 et 3,5 mm ;
f) on réalise un traitement thermique pendant lequel la tôle atteint pendant au moins trente minutes une température comprise entre 300 °C et 450 °C ;
g) on met en solution à une température comprise entre 450 °C et 515 °C et on trempe ladite tôle mince;
h) on tractionne de façon contrôlée ladite tôle avec une déformation permanente de 0,5 à 5 %, la déformation à froid après mise en solution étant inférieure à 15% ;
i) on effectue un revenu comprenant un chauffage à une température comprise entre 130 et 170°C et de préférence entre 150 et 160°C pendant 5 à 100 heures et de préférence de 10 à 40h.

2. Procédé selon la revendication 1 dans lequel la teneur en cuivre est comprise entre 2,8 et 3,1 % en poids et de préférence entre 2,8 et 3,0% en poids.

3. Procédé selon la revendication 1 ou la revendication 2 dans lequel la teneur en lithium est comprise entre 0,55 et 0,75 % en poids et de préférence entre 0,60 % et 0,73 % en poids.

4. Procédé selon une quelconque des revendications 1 à 3 dans lequel la teneur en magnésium est comprise entre 0,40 et 0,70 % en poids et de préférence entre 0,50 et 0,65 % en poids.

5. Procédé selon une quelconque des revendications 1 à 4 dans lequel ladite réduction d'épaisseur réalisée par laminage à froid est au plus de 3,0 mm.

6. Tôle mince de structure granulaire essentiellement non-recristallisée obtenue par le procédé selon une quelconque des revendications 1 à 5 dont la limite d'élasticité R_{p0,2} dans la direction TL est au moins de 395 MPa, dont la ténacité en contrainte plane Kₐₚₚ, mesurée sur des éprouvettes de type CCT760 (2ao = 253 mm) dans la direction T-L est d'au moins 150 MPa√m.

7. Tôle mince selon la revendication 6 dont la teneur en lithium est comprise entre 0,55 et 0,75 % en poids dont l'allongement dans la direction TL est au moins 14%.

8. Tôle mince selon la revendication 7 dont la teneur en magnésium est comprise entre 0,40 et 0,65 % en poids, dont la limite d'élasticité R_{p0,2} dans la direction TL est au moins de 405 MPa, dont la ténacité en contrainte plane Kₐₚₚ, mesurée sur des éprouvettes de type CCT760 (2ao = 253 mm) dans la direction T-L est d'au moins 160 MPa√m.

9. Tôle mince selon la revendication 7 dont la teneur en cuivre est comprise entre 2,8 et 3,0 % en poids et dont l'allongement dans la direction TL est au moins 15%.

10. Tôle mince selon la revendication 7 dont la teneur en magnésium est comprise entre 0,40 et 0,65 % en poids dont la teneur en cuivre est comprise entre 2,8 et 3,0 %, dont la limite d'élasticité R_{p0,2} dans la direction TL est au moins de 410 MPa, dont la ténacité en contrainte plane Kₐₚₚ, mesurée sur des éprouvettes de type CCT760 (2ao = 253 mm), dans la direction T-L d'au moins 163 MPa √m et dont l'allongement dans la direction TL est au moins 16%.

11. Utilisation d'une tôle mince selon une quelconque des revendications 6 à 10 dans un panneau de fuselage pour aéronef.

## Patentansprüche

1. Verfahren zur Herstellung eines Feinblechs von 0,5 bis 3,3 mm Dicke mit im Wesentlichen nicht rekristallisiertem Gefüge aus einer Legierung auf Basis von Aluminium, wobei nacheinander
a) ein Flüssigmetallbad hergestellt wird, umfassend
2,6 bis 3,4 Gew.-% Cu,
0,5 bis 1,1 Gew.-% Li,
0,1 bis 0,4 Gew.-% Ag,
0,2 bis 0,8 Gew.-% Mg,
0,11 bis 0,20 Gew.-% Zr,
0,01 bis 0,15 Gew.-% Ti,
wahlweise mindestens ein Element ausgewählt unter Mn, V, Cr, Sc und Hf, wobei die Menge des Elements, falls gewählt, 0,01 bis 0,8 Gew.-% für Mn, 0,05 bis 0,2 Gew.-% für V, 0,05 bis 0,3 Gew.-% für Cr, 0,02 bis 0,3 Gew.-% für Sc, 0,05 bis 0,5 Gew.-% für Hf beträgt,
eine Menge Zn von weniger als 0,6 Gew.-%, eine Menge Fe und Si jeweils kleiner oder gleich 0,1 Gew.-%, Rest Aluminium und unvermeidbare Verunreinigungen mit einem Gehalt von jeweils höchstens 0,05 Gew.-% und insgesamt 0,15 Gew.-%,
b) aus dem Flüssigmetallbad ein Walzbarren gegossen wird,
c) der Walzbarren bei einer Temperatur zwischen 450°C und 515°C homogenisiert wird,
d) der Walzbarren durch Warmwalzen zu einem Blech gewalzt wird, welches eine Dicke von 4 bis 12 mm aufweist,
e) das Blech durch Kaltwalzen zu einem Feinblech gewalzt wird, welches eine Enddicke von 0,5 bis 3,3 mm aufweist, wobei die durch Kaltwalzen bewirkte Dickenreduzierung 1 bis 3,5 mm beträgt,
f) eine Wärmebehandlung durchgeführt wird, bei der das Blech für mindestens 30 Minuten eine Temperatur zwischen 300°C und 450°C erreicht,
g) das Feinblech bei einer Temperatur zwischen 450°C und 515°C lösungsgeglüht und dann abgeschreckt wird,
h) das Blech mit einer bleibenden Verformung von 0,5 bis 5 % kontrolliert gezogen wird, wobei die Kaltumformung nach Lösungsglühen weniger als 15% beträgt,
i) eine Auslagerung durchgeführt wird, umfassend ein Erwärmen auf eine Temperatur zwischen 130 und 170°C und vorzugsweise zwischen 150 und 160°C für 5 bis 100 Stunden und vorzugsweise 10 bis 40 Stunden.

2. Verfahren nach Anspruch 1, wobei der Kupfergehalt zwischen 2,8 und 3,1 Gew.-% und vorzugsweise zwischen 2,8 und 3,0 Gew.-% liegt.

3. Verfahren nach Anspruch 1 oder Anspruch 2, wobei der Lithiumgehalt zwischen 0,55 und 0,75 Gew.-% und vorzugsweise zwischen 0,60 und 0,73 Gew.-% liegt.

4. Verfahren nach irgendeinem der Ansprüche 1 bis 3, wobei der Magnesiumgehalt zwischen 0,40 und 0,70 Gew.-% und vorzugsweise zwischen 0,50 und 0,65 Gew.-% liegt.

5. Verfahren nach irgendeinem der Ansprüche 1 bis 4, wobei die durch Kaltwalzen bewirkte Dickenreduzierung höchstens 3,0 mm beträgt.

6. Feinblech mit im Wesentlichen nicht rekristallisiertem Korngefüge erhältlich durch das Verfahren nach irgendeinem der Ansprüche 1 bis 5, dessen Dehngrenze R_{p0,2} in TL-Richtung mindestens 395 MPa beträgt, dessen Bruchzähigkeit bei flächiger Belastung Kₐₚₚ, gemessen an Proben vom Typ CCT760 (2ao = 253 mm), in T-L-Richtung mindestens 150 MPa√m beträgt.

7. Feinblech nach Anspruch 6, dessen Lithiumgehalt zwischen 0,55 und 0,75 Gew.-% liegt und dessen Dehnung in TL-Richtung mindestens 14 % beträgt.

8. Feinblech nach Anspruch 7, dessen Magnesiumgehalt zwischen 0,40 und 0,65 Gew.-% liegt, dessen Dehngrenze R_{p0,2} in TL-Richtung mindestens 405 MPa beträgt, dessen Bruchzähigkeit bei flächiger Belastung Kₐₚₚ, gemessen an Proben vom Typ CCT760 (2ao = 253 mm), in T-L-Richtung mindestens 160 MPa√m beträgt.

9. Feinblech nach Anspruch 7, dessen Kupfergehalt zwischen 2,8 und 3,0 Gew.-% liegt und dessen Dehnung in TL-Richtung mindestens 15 % beträgt.

10. Feinblech nach Anspruch 7, dessen Magnesiumgehalt zwischen 0,40 und 0,65 Gew.-% liegt, dessen Kupfergehalt zwischen 2,8 und 3,0 Gew.-% liegt, dessen Dehngrenze R_{p0,2} in TL-Richtung mindestens 410 MPa beträgt, dessen Bruchzähigkeit bei flächiger Belastung Kₐₚₚ, gemessen an Proben vom Typ CCT760 (2ao = 253 mm), in T-L-Richtung mindestens 163 MPa√m beträgt und dessen Dehnung in TL-Richtung mindestens 16 % beträgt.

11. Verwendung eines Feinblechs nach irgendeinem der Ansprüche 6 bis 10 in einer Rumpfplatte für Luftfahrzeuge.

## Claims

1. Method for manufacturing a sheet 0.5 to 3.3 mm in thickness having an essentially non-recrystallised structure made of aluminium-based alloy wherein, successively
a) a molten metal bath is prepared comprising
2.6 to 3.4% by weight of Cu,
0.5 to 1.1% by weight of Li,
0.1 to 0.4% by weight of Ag,
0.2 to 0.8% by weight of Mg,
0.11 to 0.20% by weight of Zr,
0.01 to 0.15% by weight of Ti,
optionally at least one element chosen from among Mn, V, Cr, Sc, and Hf, the quantity of the element, if chosen, being from 0.01 to 0.8% by weight for Mn, 0.05 to 0.2% by weight for V, 0.05 to 0.3% by weight for Cr, 0.02 to 0.3% by weight for Sc, 0.05 to 0.5% by weight for Hf,
a quantity of Zn less than 0.6% by weight, a quantity of Fe and Si less than or equal to 0.1% by weight each, the remainder being aluminium, and inevitable impurities at a content less than or equal to 0.05% by weight each and 0.15% by weight in total,
b) a slab is cast using said molten metal bath
c) said slab is homogenised at a temperature between 450°C and 515°C;
d) said slab is rolled by hot rolling into a plate having a thickness between 4 and 12 mm;
e) said plate is rolled by cold rolling into a sheet having a final thickness between 0.5 and 3.3 mm, the reduction in thickness achieved by cold rolling being between 1 and 3.5 mm;
f) a heat treatment is performed during which the sheet reaches for at least thirty minutes a temperature between 300°C and 450°C;
g) said sheet undergoes solution heat treated at a temperature between 450°C and 515°C and quenched;
h) said sheet is streched in a controlled manner with a permanent deformation set of 0.5 to 5%, the cold working after solution heat treatment being less than 15%;
i) artificial ageing is performed comprising heating to a temperature between 130 and 170°C and preferably between 150 and 160°C for 5 to 100 hours and preferably from 10 to 40 hours.

2. Method according to claim 1 wherein the copper content is between 2.8 and 3.1% by weight and preferably between 2.8 and 3.0% by weight.

3. Method according to claim 1 or claim 2 wherein the lithium content is between 0.55 and 0.75% by weight and preferably between 0.60% and 0.73% by weight.

4. Method according to any one of claims 1 to 3 wherein the magnesium content is between 0.40 and 0.70% by weight and preferably between 0.50 and 0.65% by weight.

5. Method according to any one of claims 1 to 4 wherein said reduction in thickness achieved by cold rolling is not more than 3.0 mm.

6. Sheet having an essentially non-recrystallised granular structure obtained using the method according to any one of claims 1 to 5 wherein the yield stress R_{p0.2} in the direction TL is at least 395 MPa, wherein the fracture toughness in plane strain Kₐₚₚ, measured on test pieces of type CCT760 (2ao = 253 mm) in the direction T-L is at least 150 MPa√m.

7. Sheet according to claim 6 wherein the lithium content is between 0.55 and 0.75% by weight wherein the elongation in the direction TL is at least 14%.

8. Sheet according to claim 7 wherein the magnesium content is between 0.40 and 0.65% by weight, wherein the yield stress R_{p0.2} in the direction TL is at least 405 MPa, wherein the fracture toughness in plane strain Kₐₚₚ, measured on test pieces of type CCT760 (2ao = 253 mm) in the direction T-L is at least 160 MPa√m.

9. Sheet according to claim 7 wherein the copper content is between 2.8 and 3.0% by weight and wherein the elongation in the direction TL is at least 15%.

10. Sheet according to claim 7 wherein the magnesium content is between 0.40 and 0.65% by weight wherein the copper content is between 2.8 and 3.0%, wherein the yield stress R_{p0.2} in the direction TL is at least 410 MPa, wherein the fracture toughness in plane strain Kₐₚₚ, measured on test pieces of type CCT760 (2ao = 253 mm), in the direction T-L is at least 163 MPa√m and wherein the elongation in the direction TL is at least 16%.

11. Use of a sheet according to any one of claims 6 to 10 in an aircraft fuselage panel.
